# EUROPÄISCHE PATENTANMELDUNG

(11) **EP 1 780 499 A1**
(43) Veröffentlichungstag der Anmeldung: **02.05.2007**
(21) Anmeldenummer: 05405697.3
(22) Anmeldetag: 14.12.2005
(51) Int. Cl.: G01B 7/06, B29C 47/92

(54) **Verfahren zum Messen der Dicke von Mehrschichtfolien**

(30) Priorität: 28.10.2005 EP 05405613
(71) Anmelder: Hch. Kündig & Cie. AG, 8630 Rüti/ZH (CH)
(72) Erfinder: Keller, Albert, 8630 Rüti/ZH (CH); Hänggli, Markus, 8630 Rüti/ZH (CH); Weber, Philipp, 8630 Rüti/ZH (CH); Stuker, Peter, 8630 Rüti/ZH (CH)
(74) Vertreter: Hammer, Bruno

(57) **Zusammenfassung**

Bei dem Verfahren zum Bestimmen der Dicke von Mehrschichtfolien (13) mit Schichten aus verschiedenen nichtleitenden Werkstoffen wird die Dicke der Mehrschichtfolie (13) mit einem ersten Sensor (17) und einem zweiten Sensor (16) und eventuell weiteren Sensoren gemessen. Der erste Sensor (17) und der oder die weiteren Sensoren (16) erzeugen für Schichten gleicher Dicke aus gleichem Werkstoff der Mehrschichtfolie (13) unterschiedliche Messwerte. Die Messsignale der Sensoren (16, 17) werden einem Rechner (18) zugeführt, der aus den unterschiedlichen Messwerten des ersten Sensors (17) und des oder der weiteren Sensoren (16) die gesamte Dicke der Mehrschichtfolie (13) und/oder die Dicke einzelner Schichten der Mehrschichtfolie (13) bestimmt.

## Beschreibung

Die Erfindung bezieht sich auf ein Verfahren zum Bestimmen der Dicke von Mehrschichtfolien nach dem Oberbegriff des unabhängigen Patentanspruchs 1. Mehrschichtfolien aus Kunststoffen sind aus einer Vielzahl von Schichten aus verschiedenen Werkstoffen aufgebaut.

Die Mehrschichtfolien werden aus verschiedenen sog. Thermoplasten, mit Coextrusion bzw. Mehrschichtextrusion hergestellt. Bekannte solche Extrusionsverfahren sind Blasextrusion und Flachextrusion. Bei der Blasextrusion werden sog. Blasfolien erzeugt. Die Schmelze wird bei der Blasextrusion aus einer Ringdüse extrudiert und zu einem Schlauch geformt. In den Schlauch wird Luft eingeblasen um diesen aufzuweiten. Der Schlauch wird dann flach gelegt, in vielen Fällen in zwei oder mehr Bahnen geschnitten und aufgewickelt.

Bei der Flachfolienextrusion wird die Schmelze aus einer Schlitzdüse extrudiert. Häufig verwendete Thermoplaste sind Polyethylen (PE), Polypropylen (PP), Polyamid (PA), Ethylen-Vinylalkohol-Copolymere (EVOH), und andere mehr.

Bei der Herstellung von Mehrschichtfolien werden gleichzeitig verschiedene Thermoplaste mit verschiedenen Eigenschaften durch Mehrfachdüsen extrudiert und zur Mehrschichtfolie vereinigt. In vielen Fällen ist es erforderlich, zwischen einzelnen Schichten der Mehrschichtfolie sog. Haftvermittler (HV) einzubringen. Die Haftvermittler haben die Bindung zwischen Schichten der Mehrschichtfolie zu verbessern.

Mehrschichtfolien werden für die Verpackung von Lebensmitteln in grossen Mengen verwendet. Man spricht dabei von Barrierekunststoffen. Diese Mehrschichtfolien weisen Schichten auf, die z.B. für Sauerstoff, Feuchtigkeit oder sonst für bestimme Stoffe wenig durchlässig sind, was zu besserer Haltbarkeit der Lebensmitteln führt. Für die Verpackung von Lebensmitteln werden Mehrschichtfolien auch als Schrumpffolien, als Kochbeutel, keimfreie Verpackungen für Molkereiprodukte usw. verwendet. Typische Sperrschichtfolien haben z.B. einen Aufbau
PE oder PP
HV
SPERRSCHICHT (PA, EVOH)
HV
PE oder PP

Weitere Einzelheiten über Mehrschichtfolien, die dafür verwendeten Materialien und deren Eigenschaften, sowie deren Herstellung findet man z.B. in gut verständlicher Form im Buch "Kunststoff-Folien, Herstellung, Eigenschaften, Anwendung" von Joachim Nentwig, Carl Hanser Verlag München Wien, 1994.

Bei der Herstellung von Folien ganz allgemein, aber insbesondere auch bei der Herstellung von Mehrschichtfolien wird die Dicke der Folien überwacht, und bei Abweichungen wird z.B. bei der Herstellung von Flachfolien die Breite des Schlitzes von Extrusionsdüsen verändert, um möglichst Folien gleicher Dicke herzustellen. Bei der Blasfolienextrusion wird lokal die Temperatur der Schmelze oder der Kühlluft oder die Menge der Kühlluft verändert.

Damit z.B. die Qualität der Blasfolie auf dem ganzen Umfang gleich ist, muss die Dicke auf dem ganzen Umfang möglichst gleichmässig sein. Eine gleichmässige Dicke ist unter anderem auch notwendig, um bei der weiteren Verarbeitung der Folie z.B. ein gleichmässiges Bedrucken zu ermöglichen. Um eine gleichmässige Dicke in der Produktion zu überwachen oder durch Stellelemente im Blaskopf zu regeln, muss das Dickenprofil der Folie gemessen werden.
Es sind beispielsweise folgende Sensortypen für die Dickenmessung an Folien bekannt:
Kapazitive Sensoren welche durch die Dielektrizitätskonstante und/oder den Dämpfungsfaktor der Folie beeinflusst werden. Kapazitive Sensoren können reflektiv oder transmissiv messen.
Sensoren die mit Ionisierender Strahlung, mit Rückstreuung oder mit Absorption arbeiten und messen.
Sensoren die mit Infrarot-Absorption transmissiv arbeiten und messen.
Sensoren welche optisch mit Interferenz-Verfahren arbeiten und messen.
Sensoren welche mechanisch oder pneumatisch die Dicke nach der Flachlegung messen.
Sensoren die thermisch messen.
Sensoren, welche Ultraschall verwenden und Laufzeiten, Dämpfung, Reflexion und/oder Phasenverschiebungen messen.

Das Problem das mit der Erfindung gelöst werden soll, wird anhand von kapazitiven Sensoren erläutert. Bei Mehrschichtfolie geht es nicht nur darum, dass die gesamte Dicke einer Folie über die ganze Folie möglichst gleich ist. Es ist auch erforderlich, dass die einzelnen Schichten möglichst gleichbleibend dick sind. Die Messsignale von kapazitiven Sensoren sind von der Dielektrizitätskonstante des zu messenden Materials abhängig. Die Messsignale von Sensoren, die nach dem Reflexionsprinzip arbeiten, sind praktisch direkt proportional zur Dicke einer Folie und zur Dielektrizitätskonstante des Materials der Folie. Die Dielektrizitätskonstanten von gewissen Materialien sind temperaturabhängig.

Sensoren, die kapazitiv nach dem Refilexionsprinzip arbeiten, werden z.B. mit Vorteil zur Messung der Foliendicke an der Folienblase von Blasfolienextrusionsanlagen verwendet. Um das Dickenprofil einer Folienblase online zu erfassen, wird ein Sensor auf einer ringförmigen Konstruktion um die Folienblase herumgeführt. Ein Umlauf dauert typischerweise 1-2 Minuten. Der Sensor wird mit gleichmässigem Druck gegen die Folienblase gedrückt. Dies ermöglicht eine sehr gute und exakte Online-Erfassung des Dickenprofils von z.B. PE-Folien.

Bei der Messung an Mehrschichtfolien die aus mehreren Schichten von Thermoplasten mit z.T. stark unterschiedliche Dielektrizitätskonstanten bestehen, kann die Messung der Dicke und von Dickenprofilen fehlerhaft sein. Da der Sensor nicht erkennen kann, dass sich z.B. gleichzeitig die Dicke der gesamten Folie und auch die Dicke einer oder mehrerer der Schichten der Mehrschichtfolie gleichzeitig so ändern, dass sich der Fehler, der von der Dicke der Folie herrührt und der Messfehler, der durch die Dicke einer Schicht der Mehrschichtfolie herrührt gegenseitig teilweise oder ganz kompensieren. Der kapazitive Sensor stellt keine oder eine falsche, eine zu hohe oder zu geringe Änderung der Dicke fest.

Bei einer anderen kapazitiven Messung an Blasfolien ist am Rand der flachgelegten Folie ein C-förmiger Kondensator angeordnet. Der Rand der Folie wird durch diesen Sensor geführt. Von der Änderung der Kapazität des Sensors wird auf Änderungen der Dicke der Folie geschlossen. Die Messempfindlichkeit dieser Sensoren, die transmissiv messen, ist direkt proportional zur Dicke und nur wenig abhängig von den Dielektrizitätskonstanten der Werkstoffe der zu messenden Folie.

Bei der Messung wird der Umstand ausgenutzt, dass der Folienschlauch bei der Flachlegung kontinuierlich dreht oder um 360° reversierend dreht. Eine Drehung des Folienschlauchs um 360° mit der Flachlegung bzw. durch Drehen des Blaskopfs dauert typisch etwa 10 bis 30 Minuten. Dadurch gerät jede Stelle auf dem Umfang der Folienblase einmal pro Umdrehung oder pro Reversierung in den Rand der Folie und somit in den Bereich des C-förmigen Sensors. Somit wird auch bei diesem Verfahren das Dickenprofil der Folie über den ganzen Umfang die ganze Breite erfasst. Die Messung der Dicke erfolgt in regelmässigen Abständen von z.B. einem oder mehreren Zentimetern über den Umfang der flachgelegten Folienblase, so dass der Umfang der Folienblase in Segmente aufgeteilt wird.

Der C-förmige Sensor an der Folienkante erfasst zwar immer die Dicke zweier Segmente zusammen. Durch die Rotation des Folienschlauchs befindet sich aber immer eine neue Kombination aus oberen und unteren Segmenten im Messbereich des Sensors. Durch diese Gegebenheit lässt sich rechnerisch die Dicke der Einzelsegmente bestimmen und zu einem Dickenprofil über den gesamten Umfang kombinieren.

Aufgabe der Erfindung ist es nun, ein Verfahren zu schaffen, welches es ermöglicht, Profile der Dicke von einzelnen Schichten von Mehrschichtfolien, bzw. Profile der Dicke von Gruppen von Schichen von Mehrschichtfolien, wie z.B. von allen Sperrschichten zusammen zu bestimmen.

Erfindungsgemäss weist das Verfahren die Merkmale des kennzeichnenden Teils des unabhängigen Anspruchs 1 auf. Die abhängigen Ansprüche beziehen sich auf vorteilhafte Ausführungsformen der Erfindung.

Mit der Information der Dicke der Anteile der Schichten oder der Gruppen von Schichten und der korrekten, gesamten Dicke der Mehrschichtfolie, welche aus der Kombination der Messungen von zwei oder mehr Sensoren bestimmt wurden, kann ein Korrekturprofil für jeden einzelnen Sensor bestimmt werden.

Unter der Annahme, dass der Effekt, welcher die Abweichung des Messwertes der gesamten Dicke für den einzelnen Sensor verursacht, an jeder Folienposition über längere Zeit konstant bleibt, kann anstelle der Messwerte des anderen Sensors dieses früher bestimmte und gespeicherte Korrekturprofil für die nachfolgenden Profile zur Korrektur der Messwerte des einzelnen Sensors verwendet werden, um den korrekten Wert der gesamten Dicke zu bestimmen.

Die Bestimmung der Dicke und von Dickenprofilen von Mehrschichtfolien nach dem neuen Verfahren nutzt z.B. die unterschiedliche Empfindlichkeit für die Dielektrizitätskonstante von kapazitiv reflektiv und kapazitiv transmissiv messenden Sensoren. Die Messewerte von kapazitiven Dickesensoren die nach dem Reflexionsprinzip arbeiten, sind ein Produkt aus der Dicke der Folie und der relativen Dielektrizitätskonstanten εᵣ. Die Messwerte von kapazitiven Dickensensoren, die nach dem transmissiven Verfahren arbeiten, sind ab einer Dielektrizitätszahl εᵣ von etwa εᵣ ≥ 5 praktisch nur noch von der Dicke des Materials abhängig. Aus den unterschiedlichen Messwerten für die Dicke einer Mehrschichtfolie werden die Korrekturwerte und Korrekturprofile rechnerisch bestimmt und Messwerte der Sensoren korrigiert indem die Messfehler rechnerisch bestimmt und die Messwerte auf der Basis der ermittelten Messfehler korrigiert werden.

Dies ist sinnvoll, um die Messungen des kapazitiv reflexiv messenden Sensors zu korrigieren, welcher zwar alle 1 bis 2 Minuten ein Dickenprofil erfasst, dessen Messungen der Gesamtdicke aber durch einen veränderlichen PA-Anteil verfälscht sein können. Mit Hilfe des Korrekturprofils kann alle 1 bis 2 Minuten ein korrektes Dickenprofil erstellt werden, welches für die Regelung der Gesamtdicke der Extrusionsanlage verwendet werden kann.
Statt kapazitiven Sensoren, wie dies im Beispiel beschrieben ist, können auch Sensoren die nach anderen Prinzipien arbeiten, oder ein kapazitiver Sensor und ein nach einem anderen Prinzip arbeitender Sensor verwendet werden. Wesentlich ist nur, dass die Messsignale der Sensoren verschiedene Empfindlichkeit für z.B. verschiedene Thermoplaste aufweisen, aus denen die Mehrschichtfolie aufgebaut ist.

Dielektrische Eigenschaften von Kunststoffen, wie Thermoplasten, die für Mehrschichtfolie verwendet werden, sind z.B. in Buch "Die Kunststoffe und ihre Eigenschaften", Hans Domininghaus, Verlag Springer, 1998 zu finden. Auf Seite 128 sind z.B. die Dielektrizitätszahlen ε und der dielektrische Verlustfaktor tan ö für Kunststoffe, die für Mehrschichtfolien verwendet werden in Abhängigkeit von der Temperatur graphisch dargestellt. Daraus ist ersichtlich, dass es in vielen Fällen zur weiteren Erhöhung der Messgenauigkeit der Sensoren beitragt, wenn auch die Temperatur der Folie gemessen und in die Ermittlung der Korrekturwerte und Werte der Dicke mit einbezogen werden.

Die Erfindung wird nachstehend anhand der schematischen Zeichnung näher erläutert.

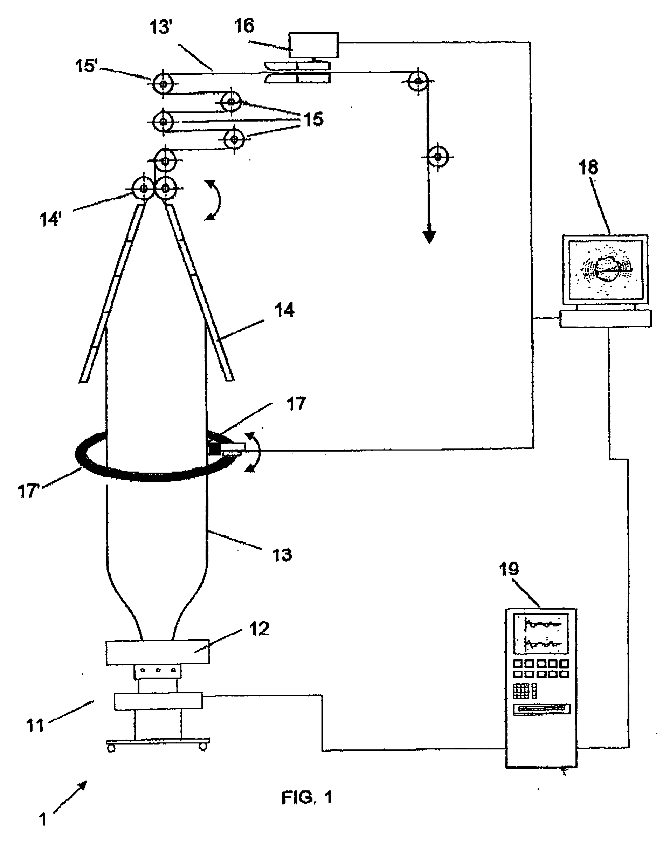

Die einzige Fig.1 zeigt das Prinzipschema einer Mehrschichtfolien-Blasextrusionsanlage , an welcher die Dicke nach dem Verfahren der vorliegenden Erfindung gemessen und überwacht wird.

Die Herstellung von Folien erfolgt in der Blasfolienextrusionsanlage 1 wie folgt: Vom Extruder mit Mehrfach-Ringdüse (nicht gezeigt) wird die austretende Schmelze der verschiedenen Thermoplaste zu einem Schlauch geformt. Dieser Folienschlauch wird mit einer Geschwindigkeit abgezogen, die grösser ist, als die Austrittsgeschwindigkeit der Schmelze. Durch einen Anschluss für Druckluft im Blaskopf 11 mit dem Formwerkzeug 12 wird der Schlauch zur Folienblase 13 aufgeblasen. Am Ende der Flachlegung 14 wird die Folienblase mit zwei Abquetschwalzen 14' abgequetscht. Der flachgelegte Folienschlauch 13' wird dann zur Wickelvorrichtung (nicht gezeigt) geleitet (Pfeil) und zu einer Rolle gewickelt.

Die Dicke der Folie wird an der Folienblase 13 mit einem ersten, z.B. kapazitiven Sensor 17, gemessen, der nach dem Reflexionsprinzip arbeitet. Der Sensor 17 läuft auf einer Bahn 17' reversierend um die Folienblase 13 herum und zurück. Der Sensor kann auch kontinuierlich um die Folienblase 13 laufen. Der Reversiervorgang bzw. die Umlaufzeit für den Sensor 17 dauert eine bis mehrere Minuten.

Nach den Abquetschwalzen 14' wird der Folienschlauch über die Wendestangen 15 zur fixen Rolle 15' geführt. Die Reversiervorrichtung mit den Wendestangen 15 sorgt dafür, dass sich die Randbereiche der abgequetschten Folienblase über den gesamten Umfang der Folienblase verschieben.

Dies hat zur Folge, dass, wenn am Rand des flachgelegten Folienschlauchs 13' z.B. mit dem zweiten, kapazitiven Sensor 16 die Dicke gemessen wird, ein Profil der Dicke quer zur Laufrichtung, um die Folienblase gemessen wird. Der Sensor 16 arbeitet transmissiv.

Die Messwerte der beiden Sensoren 16 und 17 werden dem Rechner zugeführt. Der Rechner 18 ermittelt daraus ein Korrektursignal oder ein Korrekturprofil für den Sensor 17, was im Weiteren noch eingehend erläutert werden wird. Als Zwischenprodukte fallen die Profile der Teilschichten, z.B. PE, PA an.

Das Profil der Gesamtdicke und/oder der Dicke von Teilschichten, welche der Rechner 18 berechnet, werden der Konsole 19 zugeführt, mit welcher die Anlage 1, d.h. der Extrusionsprozess gesteuert und geregelt wird. Auf dem Bildschirm des Rechners 18, können die ermittelten Werte für die Dicke der einzelnen Schichten oder Gruppen von Schichten sowie die gesamte Dicke beispielsweise graphisch und/oder numerisch dargestellt werden.

Die Werte für die Dicke können auch an die Konsole 19 für die Steuerung, Regelung, Überwachung und Einstellung der Mehrschichtfolien-Blasextrusionsanlage übermittelt werden, wo die Daten ebenfalls auf einem Bildschirm dargestellt werden könnten. Schliesslich kann auch vorgesehen sein, dass die Konsole 19 die Dicke einzelner Schichten und der gesamten Mehrschichtfolie aufgrund der nach dem Verfahren im Rechner 18 ermittelten Werte für die Dicke regelt und steuert wie dies schon früher erläutert wurde.

Bei der Erfindung geht es um die Messung und Regelung der Dicke der gesamten Mehrschichtfolie aber auch um die Messung der Dicke von Schichten aus verschiedenen Werkstoffen, meist Thermoplasten.

Die beiden Sensoren 16 und 17 haben aufgrund ihrer verschiedenen Funktionsprinzipien verschiedene Empfindlichkeit für einzelne Schichten der Mehrschichtfolien. Die Messungen des Sensors 16, der die Dicke transmissiv misst, sind nur wenig abhängig von der Dielektrizitätskonstante der Werkstoffe der Mehrschichtfolien. Die Messwerte sind somit weitgehend nur von der Dicke der Mehrschichtfolie und nur wenig von deren Dielektrizitätskonstante abhängig. Völlig unabhängig von der Dielektrizitätskonstante sind alle in der Beschreibung aufgeführten nicht kapazitiven Messverfahren.

Die Messungen bzw. die Messwerte des Sensors 17 der reflektiv misst, sind dagegen direkt proportional von der Dicke und direkt proportional von der Dielektrizitätskonstanten der Mehrschichtfolie abhängig.

Für Mehrschichtfolie macht man nach dem neuen Verfahren die für die Praxis durchaus zulässige Annahme, dass die Mehrschichtfolie aus zwei Typen von Thermoplasten bestehen. Erstens aus dem Grundmaterial, das meist ein Polyethylen (PE) mit einer Dielektrizitätskonstante εᵣ von etwa 2.3 ist und Sperrschichtmaterial wie Polyamid (PA), das eine wesentlich höhere Dielektrizitätskonstante εᵣ von 4 bis 15 hat. Obschon Mehrschichtfolien aus 5 und mehr verschiedenen Schichten aufgebaut sind, ist diese vereinfachende Annahme zulässig, da die PE-Schichten unter sich und die PA-Schichten unter sich gut vergleichbare praktisch gleiche Werte für die Dielektrizitätskonstanten εᵣ aufweisen. Rechnerisch kann also aus den Messwerten der beiden Sensoren 16 und 17 für die Dicke der ganzen Mehrschichtfolie im Wesentlichen auf die richtig korrigierte Dicke der PE-Schichten, die Dicke der PA-Schichten und natürlich auch auf die Gesamtdicke der Mehrschichtfolie geschlossen werden.

Nachstehend wird an einem Beispiel gezeigt, wie die Dicke der PA-Schichten, und jene der PE-Schichten nach dem Verfahren bestimmt werden können. Es wird dabei auch auf die Fig. 1 Bezug genommen.

**TABELLE 1 / DIE VERWENDETEN BEZEICHNUNGEN / IHRE BEDEUTUNG**

| Zeichen | Bedeutung | |
|---|---|---|
| D1 | Dickenmesswert des Sensors 16, welcher wenig oder nicht von der Dielektrizitätskonstanten εᵣ abhängig ist | |
| D2 | Dickenmesswert des Sensors 17, welcher proportional von der Dielektrizitätskonstanten εᵣ abhängig ist | |
| DE | Dicke der PE-Schicht (alle Schichten zusammen, welche ein εᵣ ähnlich wie PE haben) | |
| DA | Dicke der PA-Schicht (alle Schichten zusammen, welche ein εᵣ ähnlich wie PA haben) | |
| D | Gesamtdicke der Folie, D = DE + DA | |
| k | Konstante, kann auch eine komplizierte Formel sein | |
| εA | Dielektrizitätskonstante von PA (bzw. Sperrschicht) | |
| εE | Dielektrizitätskonstante von PE | |

Es wird dabei von folgenden Voraussetzungen und Annahmen ausgegangen.
- Alle Sperrschichten (PA, EVOH etc.) mit hohem Er werden als eine einzige Schicht betrachtet und zusammengefasst.
- Alle Schichten mit PE-ähnlichem εᵣ werden zusammengefasst und als eine einzige Schicht betrachtet.
- Der Sensor 17, welcher kapazitiv reflektiv misst, und der Sensor 16, der kapazitiv transmissiv misst seien auf den Mittelwert der Gesamtdicke bei PE kalibriert.
- Die Messempfindlichkeit der beiden Messsysteme, d.h. der beiden Sensoren 16 und 17 sei bekannt und entspreche den Gleichungen in Tabelle 2:

**TABELLE 2 / GRUNDGLEICHUNGEN**

| Gerät | GI. Nr. | | Bemerkung |
|---|---|---|---|
| Sensor 16 | (I) | D1 = DE + DA (1+k) | k = 0.6 (0.5 ... 0.8.), |
| Sensor 17 | (II) | D2 = DE + DA * (εA / εE) | εA / εE = 5 (ca. 5...6) |

**TABELLE 3 / BESTIMMUNG DER DICKENANTEILE VON PA, VON PE UND DER SUMME DER BEIDEN DICKEN**

| Methode | GI. Nr. | | Bemerkung |
|---|---|---|---|
| (II) - (I) | (III) | D2 - D1 = DA (εA / εE - 1 - k) | |
| Vereinfachung | (IV) | K = (εA / εE - 1 - k) | K = (5 - 1 - 0.6) = 3.4 (Näherung) |
| (IV) in (III) | (V) | DA = (D2 - D1) / K | Mittelwerte bzw. Profilwerte |
| aus (I) | (VI) | DE = D1 - DA*(1+k) | |
| | (VII) | D = DE + DA | gemäss Definition von D |

Mit den Formeln gemäss Tabelle 3 kann die Gesamtdicke der Mehrschichtfolie korrekt berechnet werden, obwohl die Messungen jedes Sensors allein für sich einen Messfehler aufweisen, welche von der Dicke der PA-Schicht im Verhältnis zur gesamten Dicke der Folien abhängt.

In erster Näherung genügt es, die in der Tabelle erwähnten Werte für k und εA/εE einzusetzen. Es ist natürlich möglich, die Messung weiter zu optimieren und noch präzisere Dickenwerte zu bestimmen. Es geht in diesem Beispiel jedoch lediglich und vor allem darum, das Prinzip der Bestimmung der Dickenwerte aus den Messwerten, die von den beiden Sensoren 16 und 17 ermittelt werden, zu zeigen.

Entsprechen die angenommenen Werte für k und εA/εE nicht genau der Realität und/oder werden der Sensor 16 und der Sensor 17 nicht genau aufeinander abgeglichen, so enthält das berechnete K auch noch einen Kalibrierfehleranteil. Die damit berechneten Anteile von PE und PA sind dann nicht genau. Es kann aber gezeigt werden, dass zum Beispiel bei 5% Kalibrierfehler des Sensors 17 der daraus resultierende Profilfehler für das PA Profil bei 30% PA-Anteil weniger als 0.5% beträgt.

Mit dem Sensor 17 auf der Bahn 17' kann das Dickenprofil schnell gemessen werden, aber bei Mehrschichtfolie mit viel PA wird das gemessene Profil viel mehr durch den PA-Anteil beeinflusst, als durch die Gesamtdicke. Es ist aber die Gesamtdicke, welche auf ein möglichst flaches Profil geregelt werden soll.

Mit dem Sensor 16 wird das Gesamtprofil wesentlich weniger durch den PA-Anteil beeinflusst, die Messung dauert aber etwa 5 bis 10 mal länger, was für die Profilregelung nachteilig ist.

Durch die Kombination der Messdaten von Sensor 17 und Sensor 16 kann das Profil der Gesamtdicke präziser bestimmt werden, als nur mit dem Sensor 16 oder dem Sensor 17 allein. Aus dem korrekten Gesamtprofil und dem Profil des Sensors 17 kann ein Korrekturprofil berechnet werden. Mit der Annahme, dass an jedem Profilpunkt der PA-Anteil im Verhältnis zur gesamten Dicke konstant bleibe, bleibt auch das Korrekturprofil Konstant. Mit dem gespeicherten Korrekturprofil kann aus einem neuen Profil des Sensors 17 (ohne neues Profil des Sensors 16) ein neues korrektes Gesamtprofil erstellt werden. Als Zwischenprodukte fallen die Profile der Folienschichten (PA, PE) an. In Weiterführung des aufgeführten Beispiels wird gezeigt, wie ein Korrekturprofil berechnet wird und mit diesem Korrekturprofil der Messfehler des Sensors 17 korrigiert werden kann.

Extrapolation des aktuellen Dickenprofiles:
Es ist nicht notwendig, das Profil des PA-Anteils der Dicke mathematisch exakt zu berechnen, die Korrektur des Profils wird trotzdem genügend genau. Als genügend genau wird die Messung betrachtet, wenn die Messfehler im Querprofil kleiner als 2% bis 3 % sind, was den Schwankungen der Dicke in Produktionsrichtung entspricht.

Das Ziel muss also sein, mit einer Extrapolation mindestens diese Genauigkeit zu erreichen, und zwar mit der Erfassungsgeschwindigkeit des schneller messenden Sensors 17. Schneller messen bedeutet hier, dass das Profil von einem Sensor in kürzerer Zeit gemessen wird.

Durch die Kombination der Messdaten der Sensoren 16 und 17 kann ein kombiniertes Gesamtprofil (D) genauer berechnet werden, als nur mit dem Sensor 16 allein. Als Zwischenresultate fallen dabei die Dickenprofile von DA und DE an.

Aus dem kombinierten Gesamtprofil (D) wird durch den Vergleich mit dem vom Sensor 17 ermittelten Profil (D2) ein Korrekturwert (D/D2) pro Profilpunkt berechnet, was ein Korrekturprofil ergibt.

Mit der Annahme, dass an jedem Profilpunkt der PA-Anteil, bzw. sein Einfluss auf den Messsensor und das Messgerät im Verhältnis zur gesamten Dicke lange Zeit (länger als 30 Minuten), und somit auch das Korrekturprofil konstant bleibt, können die schnellen Messungen des Sensors 17 korrigiert werden (schnell = kurze Zeit für das Messen eines Profils, was der Umlaufzeit des Sensor 17 um die Folienblase 13 entspricht), sobald vom langsameren Sensor 16 ein erstes Korrekturprofil bestimmt ist.

Für die Korrektur des nächsten, mit dem Sensor 17 ermittelten Profils (D2') wird jeder Profilwert mit dem entsprechenden Korrekturwert des Korrekturprofils multipliziert.

Der Korrekturwert hängt im Wesentlichen vom Verhältnis DAIDE bzw. DA/D ab. Einen wichtigen zusätzlichen Einfluss hat wegen der Temperaturabhängigkeit von εᵣ(PA) auch die Temperatur. Es wird angenommen, dass der PA-Anteil pro Profilpunkt konstant bleibe. Es wird angenommen, dass auch die Temperaturverteilung und damit das Temperaturprofil über dem Umfang der Folienblase konstant bleibt, was auch durchgeführte Temperaturmessung bestätigten. Mit dem Korrekturprofil kann somit auch der Einfluss der Temperaturverteilung über den Umfang der Folienblase korrigiert werden,

Mit den erwähnten Annahmen gelten die Gleichungen von Tabelle 4

**TABELLE 4 / EXTRAPOLATION DER GESAMTDICKE**

| Methode | Gl. Nr. | | Bemerkung |
|---|---|---|---|
| | (VII) | D = DE + DA | Berechnetes Referenz-Profil |
| Sensor 17 | (II) | D2 = DE + DA * (εA / εE) | Referenz-Profil Sensor 17 |
| | (VIII) | D / D2 | Korrekturfaktor pro Profilpunkt |
| Sensor 17 | (II)' | D2' = DE' + DA' * (εA / εE | neues von Sensor 17 gemessenes Profil |
| | (IX) | D' / D2' = D / D2 | Behauptung: D2', D' = neue Messwerte |
| | (X) | D' = D2' * D / D2 | Extrapolation aus D2' mit dem Korrekturfaktor pro Profilpunkt |

Anhand von Versuchen mit Testprofilen wurde festgestellt, dass die Extrapolation wesentlich besser und genauer ist, als die Messung mit dem Sensor 17 allein und auch besser als die Messung mit dem Sensor 16 allein. Die Extrapolation ist ziemlich robust gegen ungenau angenommene Werte für die Materialkonstanten (εA / εE) und k. Auch schlecht aufeinander abgeglichene Sensoren 16 und 17 der Messgeräte ermöglichen noch gute Extrapolationen.

Statt an der flachgelegten Folie einen Sensor 16, der kapazitiv transmissiv misst, für die Messung der Dicke zu verwenden, dessen Messwerte von der Dielektrizitätskonstante εᵣ des Materials der Folie wenig abhängig sind, könnte auch bei der Position des Sensors 17 ein Sensor, der mit der Messung der Rückstreuung von ionisierender Strahlung die Dicke der Folie misst oder ein Sensor, der mit einem optischen Interferenzverfahren die Dicke der Folie misst, verwendet werden. Die Messprinzipien und somit die Messungen dieser beiden Typen von Sensoren sind von der Dielektrizitätskonstante εᵣ, im Gegensatz zu einem kapazitiv reflektiv messenden Sensor 17, unabhängig. Sensoren die mit ionisierender Rückstrahlung oder mit einem optischen lnterferenzverfahren arbeiten, können in Laufrichtung der Folie direkt vor, nach oder neben dem Sensor, der kapazitiv reflektiv arbeitet angeordnet werden.

Bei der Messung der Dicke der Folie in einer Flachfolien-Extrusions-Anlage ist es vorteilhaft, die Sensoren zum Messen der Dicke der Folie auf einer Traverse, die quer oder schief zur Laufrichtung der Flachfolie und über oder unter der Flachfolie angeordnet ist, zu montieren. Die Sensoren können in Laufrichtung der Folie betrachtet hintereinander oder nebeneinander angeordnet sein und laufen auf der Traverse hin und her über die Flachfolie.

In der Gleichung (I) von Tabelle 2 würde für diesen Fall k=0. Der erste und der zweite Sensor können dann gemeinsam auf der Bahn 17' geführt werden. Da mit dieser Methode das korrekte Dickenprofil direkt mit dem Sensor, der nicht von εᵣ des Materials der Folie abhängig ist, erfasst wird, und zwar sofort und gleichzeitig oder fast gleichzeitig mit dem kapazitiv reflektiv messenden Sensor, erübrigt sich die Berechnung eines Korrekturprofils.

Die Verwendung eines optisch arbeitenden Sensors, bzw. Messgeräts ist nicht möglich, wenn die Folie stark eingefärbt ist. Der Einsatz von Sensoren, bzw. Messgeräten, die mit ionisierender Strahlung messen (z.B. Röntgenstrahlung, Gammastrahlung, Betastrahlung), ist in vielen Fällen nicht erwünscht. In all diesen Fällen kann das weiter oben beschriebene Verfahren mit einem kapazitiv transmissiv messenden Sensor 16 an der flachgelegten Folie eingesetzt werden, wobei für den Sensor 17, der an der Folienblase kapazitiv reflektiv misst, ein Korrekturprofil und das extrapolierte Profil für die Dickenmesswerte berechnet wird.

Bei dem Verfahren zum Bestimmen der Dicke von Mehrschichtfolien 13 mit Schichten aus verschiedenen nichtleitenden Werkstoffen wird die Dicke der Mehrschichtfolie 13 mit einem ersten Sensor 17 und einem zweiten Sensor 16 und eventuell weiteren Sensoren gemessen. Der erste Sensor 17 und der oder die weiteren Sensoren 16 erzeugen für Schichten gleicher Dicke aus gleichem Werkstoff der Mehrschichtfolie 13 unterschiedliche Messwerte. Die Messsignale der Sensoren 18, 17 werden einem Rechner 18 zugeführt, der aus den unterschiedlichen Messwerten des ersten Sensors 17 und des oder der weiteren Sensoren 16 die gesamte Dicke der Mehrschichtfolie 13 und/oder die Dicke einzelner Schichten der Mehrschichtfolie 13 bestimmt.

## Patentansprüche

1. Verfahren zum Bestimmen der Dicke von Mehrschichtfolien (13) mit Schichten aus verschiedenen nichtleitenden Werkstoffen mit einem ersten Sensor (17), **gekennzeichnet durch** einen weiteren Sensor (16) oder mehrere weitere Sensoren, wobei der erste Sensor und der oder die weiteren Sensoren für Schichten gleicher Dicke aus gleichem Werkstoff der Mehrschichtfolie (13) unterschiedliche Messwerte erzeugen, und die Messsignale der Sensoren (16, 17) einem Rechner (18) zugeführt werden, der aus den unterschiedlichen Messwerten des ersten Sensors (17) und des oder der weiteren Sensoren (16) die gesamte Dicke der Mehrschichtfolie (13) und/oder die Dicke einzelner Schichten der Mehrschichtfolie (13) bestimmt.

2. Verfahren nach Anspruch 1, bei welchem der verwendete erste Sensor (17) und der oder die zweiten Sensoren (16), mit denen gleiche Dicken von Mehrschichtfolien (13) unterschiedliche Messwerte erzeugen, folgende Typen von Sensoren sind:
- kapazitive Sensoren (16, 17), welche reflektiv oder transmissiv messen,
und/oder
- Sensoren mit ionisierender Strahlung, welche die Rückstreuung der Strahlung, oder die durchdringende Strahlung messen,
und/oder
- Sensoren mit Infrarotstrahlung welche die Infrarotabsorption messen,
und/oder
- optische Sensoren welche mit Interferenzverfahren messen,
und/oder
- pneumatische oder mechanische Sensoren zum Messen der Dicke der Folien,
und/oder
- thermische Sensoren,
und/oder
- Sensoren welche die Dicke von Mehrschichtfolie mit Ultraschall messen.

3. Verfahren nach Anspruch 1, oder 2, zum Bestimmen der Dicke von Mehrschichtfolien (13) aus Schichten von Werkstoffen mit unterschiedlicher Dielektrizitätszahl εᵣ, bei welchem der erste Sensor (17) kapazitiv nach dem Reflexionsverfahren (reflektiv) arbeitet, und der zweite Sensor (16) kapazitiv nach dem Transmissionsverfahren (transmissiv) arbeitet.

4. Verfahren nach einem der Ansprüche 1 bis 3, zum Bestimmen der Dicke von Mehrschichtfalien (13) aus Schichten von Werkstoffen mit unterschiedlichen Dielektrizitätskonstanten εᵣ und/oder unterschiedlichen dielektrischen Verlustfaktoren tan δ.

5. Verfahren nach einem der Ansprüche 1 bis 4, zum Bestimmen der Dicke von Mehrschichtfolien (13) bei welchem der erste Sensor (17) kapazitiv nach dem Reflexionsverfahren (reflektiv) die Dielektrizitätskonstante εᵣ, und der zweite Sensor (16) kapazitiv nach dem Reflexionsverfahren (reflektiv) den Verlustfaktor tan δ der Mehrschichtfolie misst

6. Verfahren nach Anspruch 4 oder 5, bei welchem ein einziger Sensor sowohl die Dielektrizitätskonstante εᵣ als auch den dielektrischen Verlustfaktor tan δ misst und damit als erster und als zweiter Sensor dient.

7. Verfahren nach einem der Patentansprüche 1 bis 6, bei welchem aus den Dickenmesswerten von mindestens zwei nach verschiedenen Messprinzipien arbeitenden Sensoren (16, 17) Korrekturwerte für mindestens einen der Sensoren (16 oder 17) bestimmt werden, aus welchen für eine nachfolgende Messung aus den Messwerten und den Korrekturwerten dieses Sensors (16 oder 17) die korrekte gesamte Dicke der Mehrschichtfolie und/oder die korrekte Dicke einzelner Schichten oder einzelner Gruppen von Schichen der Mehrschichtfolie bestimmt wird.

8. Verfahren nach einem der Ansprüche 1 bis 7 bei welchem
der erste Sensor mit einem Messprinzip arbeitet, dessen Dickenmesswerte von der Dielektrizitätskonstante εᵣ des Materials der Folie stark und vorzugsweise direkt proportional abhängig sind, insbesondere mit einem Sensor der mit dem kapazitiv reflektiv arbeitenden Messprinzip arbeitet und misst und
der zweite Sensor mit einem Messprinzip arbeitet, dessen Dickenmesswerte von der Dielektrizitätskonstante εᵣ des Materials der Folie und der Schichten der Folie nicht oder nur schwach abhängig sind, vorzugsweise, mit einem Sensor der die Dicke der Folie mit der Rückstreuung ionisierender Strahlung oder einem Sensor, der die Dicke der Folie mit einem optischen Interferenzverfahren misst.

9. Verfahren nach einem der Ansprüche 1 bis 8, bei welchem die Sensoren die Dicke der Folie an derselben Stelle der Folie oder an benachbarten Stellen der Folie, vorzugsweise an der Folienblase oder der flachgelegten Folie messen.

10. Anwendung des Verfahrens nach einem der Ansprüche 1 bis 9, in einer Mehrschichtfolien-Blasextrusions-Anlage oder in einer Flachfolien-Extrusions-Anlage, zum Messen, Überwachen und/oder Regeln
der gesamten Dicke, und/oder der Dicke einzelner Schichten und/oder der Dicke von Gruppen von Schichten, insbesondere der Sperrschichten in Mehrschichtfolien (13).

11. Anwendung des Verfahrens nach einem der Ansprüche 1 bis 9 zum Messen Überwachen und/oder Regeln der Dicke der Mehrschichtfolien (13), in einer Mehrschichtfolien-Blasextrusions-Anlage, wobei der erste Sensor (17) die Dicke der Folie (13) an der Folienblase misst und der zweite Sensor (16) die Dicke der Folie am Rand der flachgelegten Folie (13') misst.

12. Anwendung des Verfahrens nach einem der Ansprüche 1 bis 9 zum Messen, Überwachen und/oder Regeln der Dicke der Mehrschichtfolie, und/oder der Dicke einzelner Schichten und oder der Dicke von Gruppen von Schichten der Mehrschichtfolie, in einer Flachfolien-Extrusionsvorrichtung wobei der erste Sensor und der zweite Sensor die Dicke der Flachfolie messen und die Sensoren auf einer Traverse, die quer oder schief zur Laufrichtung der Folie angeordnet ist montiert sind, und die Sensoren sich auf der Traverse hin und her bewegen.
